# EUROPÄISCHE PATENTANMELDUNG

(11) **EP 1 145 756 A2**
(43) Veröffentlichungstag der Anmeldung: **17.10.2001**
(21) Anmeldenummer: 01108838.2
(22) Anmeldetag: 09.04.2001
(51) Int. Cl.: B01F 3/04, C02F 3/20

(54) **Vorrichtung zur lösbaren Befestigung von Belüftungseinrichtungen bei Anlagen zum Belüften vom Wasser**

(30) Priorität: 16.04.2000 DE 10018909
(71) Anmelder: GUMMI-JÄGER KG GMBH & CIE, D-30625 Hannover (DE)
(72) Erfinder: Edel, Volker, Dr., 30916 Isernhagen (DE)
(74) Vertreter: Depmeyer, Jochen

(57) **Zusammenfassung**

Die Erfindung betrifft Vorrichtungen der obigen Art, bei denen Befestigungselemente (8) die Luftzuführungsleitungen (1) umschliessen. Um grössere Toleranzen bei Luftzuführungsleitungen (1) bezüglich ihres Aussendurchmessers ausgleichen zu können, sind erfindungsgemäss die Befestigungselemente (8) - in Richtung der Luftzuführungsleitung (1) gesehen - wellen- oder zickzackförmig gestaltet in der Weise, dass ihre an der Innenseite gelegenen Vorsprünge (9) die Luftzuführungsleitung (1) berühren.

## Beschreibung

Die Erfindung betrifft eine Vorrichtung zur lösbaren Befestigung von Belüftungseinrichtungen an Luftzuführungsleitungen bei Anlagen zum feinblasigen Belüften von Wasser, wobei die Befstigungselemente die Luftzuführungsleitungen umschliessen.

Bei bekannten Vorrichtungen dieser Art werden die Belüftungseinrichtungen mit einer geteilten Schelle an den Luftzuführungsleitungen befestigt. Dadurch wird eine Lösbarkeit an diesen Leitungen erreicht. Zudem ist die Schelle ihrerseits mit der Belüftungseinrichtung lösbar verbunden. Mit dieser Befestigungseinrichtung können jedoch Toleranzen insb. im Hinblick auf die Luftzuführungsleitung nur in ganz beschränktem Umfang ausgeglichen werden.

Der Erfindung liegt die Aufgabe zugrunde, die Vorrichtung so auszuführen, dass vergleichsweise grosse Toleranzen ausgeglichen werden können, um so auch bei Massabweichungen eine sichere, dauerhafte Befestigung der Belüftungseinrichtung an ihrer Luftzuführungsleitung sicherzustellen.

Zur Lösung dieser Aufgabe sind erfindungsgemäss die biegsam ausgeführten Befestigungselemente - bei Betrachtung in Richtung der Luftzuführungsleitung - wellen- oder zickzackförmig gestaltet in der Weise, dass ihre an der Innenseite gelegenen Vorsprünge die Luftzuführungsleitung berühren, wobei die Befestigungselemente vorzugsweise so bemessen werden, dass die Vorsprünge die Luftzuführungsleitung beaufschlagen, also dort mit Vorspannung anliegen.

Aufgrund einer solchen Gestaltung der Befestigungselemente können sich diese nicht nur unterschiedlichen Querschnitts- bzw. Aussenkonturen der Luftzuführungsleitungen anpassen, vielmehr können sich die Befestigungselemente nunmehr auch elastisch dehnen und so bei Luftzuführungsleitungen mit unterschiedlichem Aussendurchmesser eingesetzt werden.

Es ist zweckmässig, die Befestigungselemente fest mit der Belüftungseinrichtung zu verbinden bzw. diese Einrichtung und diese Elemente einstückig auszubilden, und zwar insb. für den Fall, dass diese Teile aus einem geeigneten Kunststoff bestehen. Vorzugsweise wird dabei ein Spritzverfahren anzuwenden sein. Dabei ist es auch vorteilhaft, wenn die Befestigungselemente im noch nicht montierten Zustand eine von der Kontur der benutzten Luftzuführungsleitung abeichende Gestalt aufweisen, und zwar so, dass die Befestigungselemente zum Zwecke der Montage verbogen werden müssen, wobei in die Befestigungselemnte günstige Haltespannungen eingeleitet werden.

Mit Vorteil bestehen die Befestigungselemente aus zwei Abschnitten, die je mit der Belüftungseinrichtung fest verbunden sind. Die freien Ende der Abschnitte erhalten dabei Haken oder ähnliche Verbindungselemente, um die Abschnitte an Ort und Stelle schnell formschlüssig zusammenschliessen zu können, und zwar unter Verzicht auf besondere, zusätzliche Haltemittel.

Weitere Einzelheiten der Erfindung werden anhand der Zeichnung erläutert, in der Ausführungsbeispiele der Erfindung dargestellt sind. Es zeigen :
Fig. 1 eine Vorrichtung zur lösbaren Befestigung einer rohrförmigen Belüftungseinrichtung an einer Luftzuführungsleitung im senkrechten Schnitt,
Fig. 2 die Vorrichtung gemäss Fig. 1 in der Seitenansicht,
Fig. 3 eine Vorichtung zur lösbaren Befestigung einer tellerförmigen Belüftungseinrichtung an einer Luftzuführungsleitung im senkrechten Schnitt und
Fig. 4 die Vorrichtung gemäss Fig. 3 im noch nicht montierten Zustand.

Die erfindungsgemässe Vorrichtung ist Bestandteil einer unter Wasser angeordneten Anlage zum feinblasigen Belüften von Gewässern bzw. Abwasseranlagen.

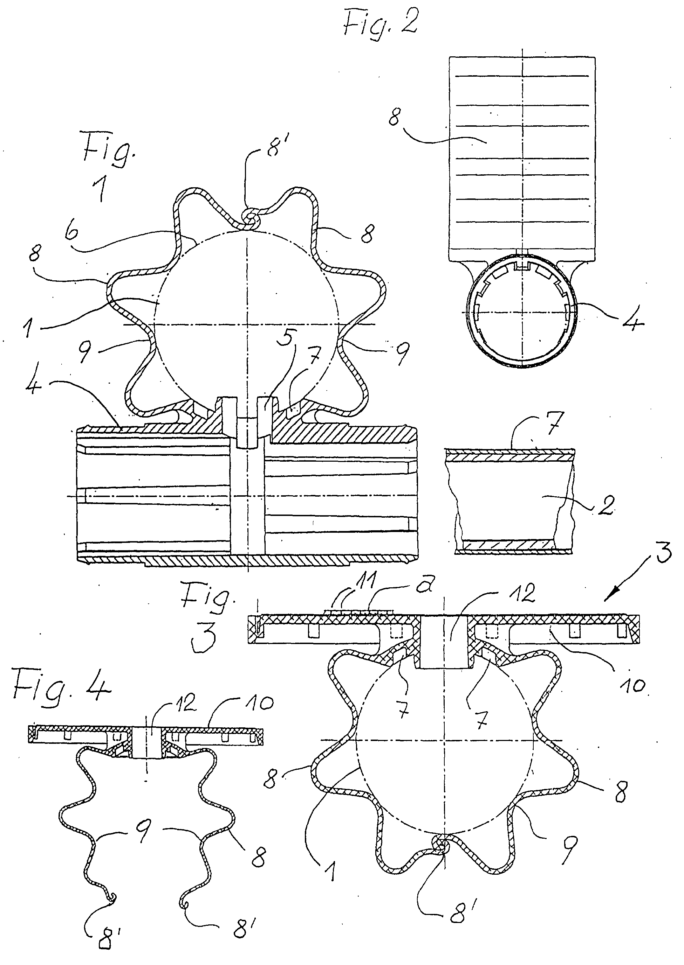

Die vorgespannte Luft wird über ein der Luftzufuhr dienendes Rohr 1 ( Luftzuführungsleitung ) zugeführt, von dem aus die einzelnen Belüftungseinrichtungen z. B. in Form eines Belüftungsrohres 2 gemäss Fig. 1 und 2, eines Tellerbelüfters 3 gemäss Fig. 3 , ggfs. aber auch über ein Zwischenrohr beschickt werden.

Gemäss Fig. 1 und 2 ist eine etwa rohrförmige Halterung 4 vorgesehen, die mit einem nach oben gerichteten Stutzen 5 in ein Loch des nur durch einen Linienzug 6 angedeuten Rohres 1 hineinragt. Zur Abdichtung können Gummidichtungen angebracht werden, die in einer Nut 7 der Halterung 4 angeordnet sind. Vom Rohr 1 gelangt die Luft über den Stutzen 5 über beliebig ausgeführte Anordnungen zwischen die Aussenfläche des Belüftungsrohres 2 einerseits und einem feingeschlitzten Gummirohr 7 andererseits, über dessen sich unter dem Luftdruck öffnenden Schlitze die Luft in feinen Blasen dem Wasser zugeführt wird, wobei es sich versteht, dass das in die Halterung 4 eingeschobene Belüftungsrohr 2 die Halterung 4 beidendig überragt, und zwar im rechten Winkel zum Rohr 1 verlaufend.

Um eine betriebssichere, lösbare, im wesentlichen toleranzunabhängige Befestigung der Halterung 4 an dem Rohr 1 erreichen zu können, sind an der Halterung 4 zwei Abschnitte 8 eines Befestigungselementes angeformt, die ebenso wie die als Formkörper ausgeführte Halterung 4 aus einem Kunststoff bestehen und wegen ihrer geringen Wandstärke biegsam, aber insg. zäh ausgeführt sind. Die beiden Abschnitte sind -in Richtung des Rohres 1 gesehenwellenförmig - im wesentlichen sinusartig - gestaltet und stossen oberhalb des Rohres 1 zusammen, wo sie hakenförmig ausgebildet und durch Verhaken zusammengehalten sind. Die innen gelegenen Wellenberge 9 der Abschnitte 8 liegen bei entsprechender Bemessung der Abschnitte mit einer geringen Vorspannung auf dem Rohr 1 auf und verankern somit die Halterung 4 am Rohr 1.

Es versteht sich, dass die Montage durch Verbiegen der Abschnitt 8 und Verhaken geschieht. Zum Demontieren werden die Abschnitte 8 geringfügig verformt und enthakt.

Aus Fig. 2 ist erkennbar, dass die axiale Erstreckung der Abschnitte im wesentlichen dem Aussendurchmesser des Rohres 1 entspricht bzw. geringfügig grösser ist. Dadurch ergibt sich eine wünschenswerte Kippsicherheit.

Bei der Ausführung gemäss Fig. 3 wird die auf der tellerförmigen Halterung 10 aufliegende Gummiplatte - bei a mit Schlitzen 11 angedeutet - über einen Stutzen 12 gespeist, der in das Rohr 1 hineinragt. Auch hier können Nuten 7 an der Halterung 9 vorgesehen sein, um dort Dichtungen einlegen zu können. Die an der Halterung 10 fest angeformten Abschnitte 8 erstrecken sich nach unten und werden auch hier aufgrund ihrer hakenförmigen Enden bei 8' miteinander verbunden.

Vorzugsweise sind die Abschnitte 8 aufgrund ihrer Herstellung so geformt, dass sich ihre Enden 8' im Abstand voneinander befinden, damit zur Montage eine Verbiegung der Abschnitte 8 und eine Beaufschlagung des Rohres 1 durch die Wellenberge 9 erfolgen kann. Zugleich ergibt sich auch eine bessere Entformbarkeit bei der Herstellung.

## Patentansprüche

1. Vorrichtung zur lösbaren Befestigung von Belüftungseinrichtungen an Luftzuführungsleitungen bei Anlagen zum feinblasigen Belüften von Wasser, wobei die Befestigungselemente die Luftzuführungsleitung umschliessen, **dadurch gekennzeichnet, dass** die biegsam ausgeführten Befestigungselemente (8) - bei Betrachtung in Richtung der Luftzuführungsleitung (1) - wellen- oder zickzackförmig gestaltet sind in der Weise, dass ihre an der Innenseite gelegenen Vorsprünge (9) die Luftzuführungsleitung (1) berühren.

2. Vorrichtung nach Anspruch 1, **dadurch gekennzeichnet, dass** die Befestigungselemente (8) so bemessen sind, dass ihre Vorsprünge (9) die Luftzuführungsleitung (1) mit Spannung beaufschlagen.

3. Vorrichtung nach Anspruch 1, **dadurch gekennzeichnet, dass** die Breite ( axiale Erstreckung ) der Befestigungselemente (8) gleich gross ist oder geringfügig grösser ist als Quererstreckung der zugehörigen Halterung (4) für die Belüftungseinrichtung (2,7) ( Fig. 2).

4. Vorrichtung nach Anspruch 1, **dadurch gekennzeichnet, dass** die Befestigungselemente (8) und die zugehörigen Halterungen (4,10) für die Belüftungseinrichtung (2,7,3) einstückig, vorzugsweise als ein insb. im Spritzgussverfahren gefertigter zähharter Kunststofformkörper ausgeführt sind.

5. Vorrichtung nach Anspruch 4, **dadurch gekennzeichnet, dass** die Befestigungselemente (8) aus zwei Abschnitten bestehen, die je mit einem Ende mit der Belüftungseinrichtung bzw. ihren Halterungen (4,10) fest verbunden und mit ihren anderen Enden (8') lösbar verbindbar sind.

6. Vorrichtung nach Anspruch 5, **dadurch gekennzeichnet, dass** die Enden (8') miteinander verhakt sind.

7. Vorrichtung nach Anspruch 5, **dadurch gekennzeichnet, dass** die Befstigungselemente (8) im noch nicht montierten Zustand eine von ihrer Wirklage stark abweichende Gestalt aufweisen ( Fig. 4 ).

8. Vorrichtung nach Anspruch 5, **dadurch gekennzeichnet, dass** die freien Enden (8') der Befestigungselemente (8) im noch nicht montierten Zustand mit Abstand voneinander angeordnet sind ( Fig. 4 ).

9. Vorrichtung nach Anspruch 5, **dadurch gekennzeichnet, dass** die zum Verbinden der Enden (8') dienenden Mittel an den Befestigungselementen (8) angeformt sind.

10. Vorrichtung nach Anspruch 1, **dadurch gekennzeichnet, dass** die Belüftungseinrichtung (3) nach Art eines Tellerbelüfters ausgebildet ist (Fig. 3, 4).

11. Vorrichtung nach Anspruch 1, **dadurch gekennzeichnet, dass** die Befestigungselemente (8) an einer etwa rohrförmigen Halterung (4) befestigt sind, die zur Aufnahme rohrförmiger Belüftungseinrichtungen (2,7) dienen (Fig. 1,2).
